# NEW EUROPEAN PATENT SPECIFICATION

(11) **EP 1 943 444 B2**
(45) Date of publication and mention of the opposition decision: **17.07.2019**
(45) Mention of the grant of the patent: 28.07.2010
(21) Application number: 06844250.8
(22) Date of filing: 02.11.2006
(51) Int. Cl.: F16J 1/04, F02F 3/02

(54) **PISTON**
KOLBEN
PISTON

(30) Priority: 03.11.2005 US 265870; 03.11.2005 US 265948
(43) Date of publication of application: 16.07.2008
(60) Divisional application: 09162350.4
(73) Proprietor: GE Distributed Power, Inc., Waukesha, WI 53188 (US)
(72) Inventor: DONAHUE, Richard, J., Colgate, WI 23017 (US)
(74) Representative: Hoffmann Eitle
(86) International application number: PCT/US2006/042774
(87) International publication number: WO 2007/056044

(56) References cited:
- EP-A1- 0 188 108
- DE-A1- 3 437 111
- DE-A1- 3 820 473
- DE-C1- 3 740 820
- JP-A- 9 170 490
- US-A- 5 076 226
- US-A1- 5 158 008
- US-A1- 5 193 436
- US-B2- 6 502 539

## Description

### TECHNICAL FIELD

This document relates to pistons for use in engines or the like.

### BACKGROUND

Various types of engines may use pistons in a cylinder bore. Each piston may reciprocate within its associated bore as a portion of the piston's outer circumferential surface is guided by the cylinder wall. The piston may include a skirt that is shaped to bear against the cylinder wall (with a hydrodynamic layer therebetween to provide lubrication) as the piston is reciprocated in the cylinder bore. In general, the lower portion of the piston within the piston skirt is substantially hollow while the upper portion of the piston near the piston face is solid. Accordingly, the piston may have non-uniform thermal expansion and non-uniform rigidity.

Stress concentrations caused by the piston's thermal expansion, flexing, and rocking in the bore may cause the piston to "poilsh" or otherwise scuff the surface of the cylinder wall after repeated reciprocating movements. Also, thermal expansion of the piston material may increase the contact force between the piston and bore, causing high friction that may result in loss of efficiency and possible seizure of the piston in the cylinder bore. If the outer radius of the piston is too small, the outer circumferential surface may not sufficiently bear against the cylinder wall-causing the piston to excessively rock on the piston pin axis or vibrate within the cylinder bore.

JP 09170490A discloses a cast iron piston for an internal combustion engine, said piston having a top portion and a skirt portion. The skirt portion is provided with an annular recessed escape groove which is provided at a specified interval from a lower end surface of the skirt in order to reduce influence of deformation caused by heat and cylinder pressure. JP 0 917 04 90 A discloses the features of the preamble of claim 1.

DE 37 40 820 C1 also discloses a piston for an internal combustion engine having a top portion and a skirt portion. The skirt portion of the piston has a convex shape.

### Summary of the Invention

The invention relates to an apparatus as claimed in claim 1.

In some embodiments, a piston may include a head portion, a skirt portion, an axial profile in a thrust plane. The axial profile, when the piston is substantially at an operating temperature, may include a lower skirt profile and an intermediate skirt profile adjacent the lower skirt profile. At least a portion of the intermediate skirt profile may have a concave curvature in the thrust plane. The axial profile may also include an upper skirt profile adjacent the intermediate skirt profile.

In a number of embodiments, an apparatus may include an internal combustion engine having at least one wall defining a bore. The apparatus may also include a piston disposed to reciprocate in the bore. The piston may include a head portion and a skirt portion. The piston may have a substantially circumferential outer surface and at least a portion of the outer surface may bear against the wall in a thrust plane. The outer surface may include a lower skirt portion, an intermediate skirt portion, and an upper skirt portion. The intermediate skirt portion may include a concave curvature in the thrust plane when the piston is substantially at operating temperature.

In some embodiments, an internal combustion engine may include a bore wall at least partially defining a bore. The engine may also include a piston that moves in the bore in response to a combustion event that provides a rod force component and a thrust force component. The thrust force component may urge the piston against a major thrust side of the bore wall. The piston may include a head portion and a skirt portion. The skirt portion may have a substantially circumferential skirt wall that is operable to bear against the bore wall in a thrust plane. The skirt wall may include an upper skirt point along a major thrust side of the thrust plane spaced apart from a lower skirt point along the major thrust side of the thrust plane. The portion of the skirt wall proximal to the lower skirt point may have substantially greater radial flexibility than the portion of the skirt wall proximal to the upper skirt point Also, the upper skirt point and the lower skirt point may bear substantially equivalent lateral loads when the piston is urged against the major thrust side of the bore wall.

These and other embodiments may be configured to provide one or more of the following advantages. First, the piston shape may provide better guidance within the cylinder bore. Second, in some embodiments the piston may be configured to provide a more uniform load distribution along the major thrust side of the outer circumferential surface, which may reduce occurrences of "polishing" or otherwise scuffing the cylinder wall. Third, the piston shape may reduce the rocking angle of the top face of the piston, which may permit smaller clearances between the top of the piston and the cylinder wall. Such a reduction of that clearance may improve the engine performance and efficiency.

Certain embodiments of the invention include a piston having a shape that may provide enhanced piston guidance. In such embodiments, the piston shape may include the axial profile configured to focus the thrust reaction forces on the piston skirt so that a skirt force centroid is positioned at an axial height at or slightly below the pivot axis of the piston. Such a configuration is capable of reducing the thrust force moment that would ordinarily cause a rocking motion of the piston. Also, such a configuration may reduce the likelihood of the more rigid portions of the piston causing scuffs along the cylinder wall, thereby permitting a substantially smaller clearance gap between the top land and the cylinder wall.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1A is a side view of a piston and a portion of an engine in accordance with some embodiments of the invention.
FIG. 1B is a side view of the piston of FIG. 1A.
FIG. 2 is a cross-sectional view of a piston in accordance with some embodiments of the invention.
FIG. 3 is a diagram showing an example of an axial profile of a piston skirt in accordance with an embodiment of the invention.
FIG. 4 is a schematic view of a cross-section of a piston in accordance with some further embodiments of the invention.
FIG. 5 is a diagram showing an example of a polar profile of a piston in accordance with an embodiment of the invention.

Like reference symbols in the various drawings indicate like elements.

### DETAILED DESCRIPTION OF ILLUSTRATIVE EMBODIMENTS

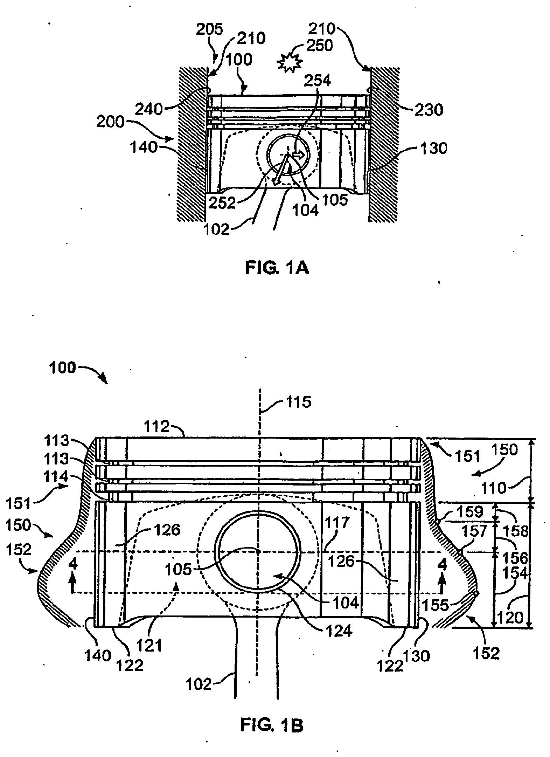

Referring to FIGS. 1A-B, a piston 100 is capable of reciprocating within a cylinder bore 205 of an engine 200 (a portion of the engine 200 has been removed from FIG. 1A to better view the piston 100). A hydrodynamic layer of oil or other lubricant may coat portions of the cylinder wall 210 to reduce friction between the piston 100 and the cylinder wall 210. The piston 100 may be pivotably engaged with a piston rod 102 using a pin 104. In such circumstances, the piston 100 may pivot about a pivot or pin axis 105 relative to the rod 102. The pin connection permits the piston 100 to transmit forces to, or receive forces from, the rod 102 as the piston 100 reciprocates within the bore 205. In certain embodiments, the piston 100 is constructed in whole or in part from aluminum or alloys containing aluminum, carbon (e.g. carbon fiber and carbon/carbon), iron, steel, or other suitable materials and may include combinations of the above-mentioned or other materials.

Referring to FIG 1A, the cylinder bore 205 may define at least a portion of a combustion chamber where a combustion event 250 exerts a force on the piston 100 and causes an expansion stroke. The combustion pressure may be transferred to the piston 100 in a direction substantially parallel to the axis of the cylinder bore 205 because at least a portion of the piston's top surface 112 (FIG. 1B) may be substantially perpendicular to the axis of the cylinder bore 205. A portion of the force from the combustion event 250 may be transmitted as a rod force component 252 to the rod 102 (in a longitudinal direction of the rod 102). Also, because the rod 102 may not be aligned with the direction of the combustion force, a portion of the force from the combustion event 250 may be transmitted as a thrust force component 254.

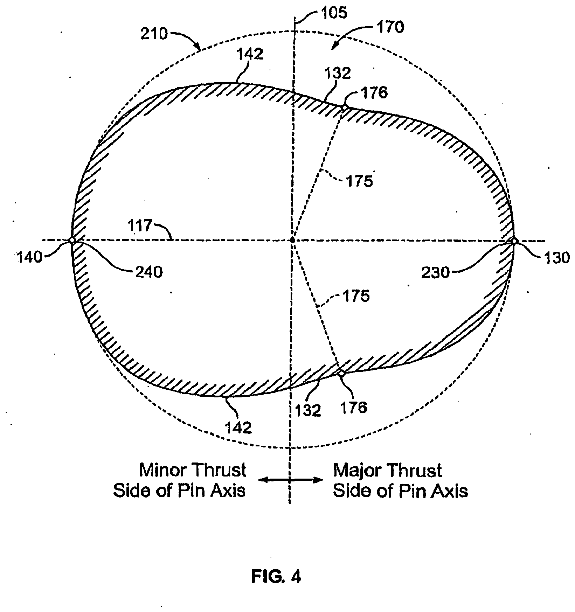

The thrust force 254 may urge a major thrust surface 130 of the piston 100 against a major thrust side 230 of the cylinder wall 210. The thrust force component 254 may be in the thrust plane, which is a plane substantially normal to the pin axis 105 that may extend along a thrust axis 117 (also shown in FIG 4) through the major thrust surface 130 of the piston 100. The thrust force 254 may generate a moment about the pin axis 105, causing the piston 100 to pivot about the pin axis 105 such that the piston axis 115 is angled from the cylinder bore axis at a rocking angle.

To provide guidance during the reciprocation motion and to limit the rocking angle of the piston 100 (excessive rocking could cause stress concentrations that "polish" or otherwise scuff the cylinder wall 210), the piston 100 may include a skirt portion 120 that bears against the cylinder wall 210-preferably with a hydrodynamic layer of lubricant therebetween. This skirt portion 120 may guide the piston 100 to restrict the rocking motion of the piston 100. In addition, the piston skirt 120 may flex when the thrust force 254 urges the piston 100 against the major thrust side 230 (described in more detail below).

It should be understood that, during the compression stroke (not shown in FIG 1A), the piston 100 may react to a force from the rod 102 at the pin connection. In some instances, the rod 102 may force the piston 100 to compress the combustion chamber in anticipation of a subsequent combustion event. A reaction component of the force from the rod 102 may be in the form of a thrust force that urges a minor thrust surface 140 of the piston 100 against that minor thrust side 240. Again, in such circumstances, the piston skirt 120 may guide the piston 100 to restrict the rocking motion of the piston 100.

Referring to FIG. 1B, the piston 100 includes a piston head portion 110 and the piston skirt portion 120. The piston head 110 may include a piston top 112 that faces the combustion chamber described above in connection with FIG. 1A. The piston head 110 may include one or more ring grooves, such as one or more compressed-ring mounting grooves 113 (two shown) and one or more oil-ring mounting grooves 114 (one shown). In general, the piston skirt 120 is adjacent the piston head 110 and begins at or about, and extends below, the bottom wall of the lowest ring groove (e.g., ring groove 114 in this embodiments) opposite the piston's top surface 112. The piston skirt 120 includes a generally hollow portion 121 proximal the bottom 122 of the piston 100. The piston skirt 120 may also include pin bores 124 aligned with the pin axis 105 to receive the pin 104. The pin 104 is joined with the pin bores 124 and is disposed in the hollow portion 121 of the skirt 120.

The piston head 110 is generally more rigid than the piston skirt 120, and in some embodiments, may be a solid construction. As such, when the thrust force 254 urges the piston 100 against the major side 230 of the cylinder wall 210, the piston skirt 120 may flex substantially more than the piston head 110. However, the rigidity of the piston skirt 120 is not necessarily constant from the bottom 122 to the piston head 110. For example, in the embodiment shown in FIG 1B, the circumferential wall 126 that surrounds the hollow portion 121 generally increases in thickness from the bottom 122 toward the piston head 110. In such circumstances, the piston skirt 120 may be more rigid near the piston head portion 110 of the piston 100 (where the wall thickness is greater).

Still referring to FIG. 1B, the axial profile (in the thrust plane) of the piston 100 is depicted schematically at operating temperature using axial profile line 150. Because of differences in temperature at different locations about the piston 100 that occur during operation, the amount of thermal expansion of the piston 100 along its axis may not be uniform. Accordingly, the axial profile of the piston 100 at ambient room temperature (most or all of the piston is at 25°C (77°F)) may be different than at operating temperature. The operating temperature is the temperature distribution about the piston 100 that is achieved and maintained when the engine 200 is operated at steady state for an extended time. The operating temperature may vary depending upon the configuration of the engine, but in general, the operating temperature is substantially greater than ambient room temperature. For example, at operating temperature, temperatures of the piston may be in the range of 65.6 °C to 538°C (150°F to 1000°F), and in some circumstances, in the range of (200°F to 700°F) 93.3°C to 371°C

The axial profile line 150 shows changes to the outer circumferential surface of the piston 100 in a direction along the piston axis 115. The axial profile line 150 illustrated in FIG 1B represents the changes to the outer radius of the piston 100 relative to the axial height in a thrust plane cross-section. As previously described, the thrust plane is substantially normal to the pin axis 105 and may extend along the thrust axis 117 (also shown in FIG 4) through the major thrust surface 130 of the piston 100. The axial profile line 150 is shown in exaggerated form for illustrative purposes only. It should be understood that the change in the outer radius of the piston 100 may be small relative to the overall size of the piston 100, so the piston 100 may appear substantially cylindrical in shape when viewed from a distance. In this embodiment, the axial profile line 150 along the major thrust surface 130 is similar in shape to the axial profile line 150 along the minor thrust surface 140.

The axial profile line 150 may include a skirt profile line 152 coinciding with the skirt portion 120 and a head profile line 151 coinciding with the piston head portion 110. The head profile line 151 shows that, in this embodiment, the outer radius of the piston progressively decreases near the top surface 112 of the piston 100 (the head profile line 151 shown in FIG 1B does not depict the exact contours of the piston at the grooves 113 and 114). As such, the shape of the piston head 110 may provide some clearance space between top edge of the piston 100 and the cylinder wall 210. This clearance space may be required to reduce the likelihood of scuffing the cylinder wall 210 when the piston 100 is oriented at its maximum rocking angle. The efficiency of transferring the combustion pressure to the piston 100 may be increased, however, if the clearance space between top edge of the piston 100 and the cylinder wall 210 is reduced. In this embodiment, the piston 100 may be designed to have a reduced clearance space between top edge of the piston 100 and the cylinder wall 210. As described in more detail below, the piston skirt portion 120 may be configured to bear against the cylinder wall 210 and carry a substantial portion of the thrust load when the thrust force 254 urges the piston 100 against the cylinder wall 210. When the piston skirt portion 120 bears against the cylinder wall 210 and provides sufficient guidance to the piston 100, the tendency of the piston 100 to rock about the pin axis 105 may be reduced, which in turn permits a design having a reduced clearance space at the top edge of the piston 100.

Alternatively, the head profile line 151 of the piston head 110 may have a constant outer radius which is smaller than the radius of the skirt portion 120. In such embodiments, some clearance space between top edge of the piston 100 and the cylinder wall 210 would exist. Again, this clearance space can be reduced by causing the piston skirt 120 to bear against the cylinder wall 210 and carry a substantial portion of the thrust load when the thrust force 254 urges the piston 100 against the cylinder wall 210, as described in more detail below.

Still referring to FIG. 1B, at least a portion of the piston's axial profile may change to account for a reduction in the rigidity of the piston 100. As previously described, the piston skirt 120 may be less rigid the than the piston head 110. In such embodiments, the major thrust surface 130 and the minor thrust surface 140 may be shaped to account for the changes in rigidity, for example, by varying the outer radius in the thrust plane as a function of the piston wall thickness, wall flexure, and other factors.

The skirt profile line 152 of the piston 100 includes a lower skirt profile line 154 and an intermediate skirt profile line 156, and some embodiments may also include an upper skirt profile line 158. In this embodiment, at least a portion of the lower skirt profile line 154 may have a convex curvature including a maximum radius point 155. In this embodiment, the maximum radius point 155 represents the location of the maximum outer diameter of the piston's circumferential surface. The maximum radius point 155 may occur along the lower skirt profile line 154 at an axial height above the bottom 122 where the circumferential wall 126 is least rigid. (In some embodiments, the maximum radius point 155 may occur along the lower skirt profile line 154 at or near the bottom 122.) The lowest portion of the lower skirt profile line 154 (e.g., proximal the bottom 122), while perhaps less rigid, may include a convex curvature inward to avoid gouging the cylinder wall 210. The convex curvature of the lower skirt profile line 154 also aids in installation of the piston into the cylinder bore, because it helps to center the piston in the cylinder bore. It should be understood that in other embodiments the lower skirt profile line 154 may include other curvatures or slopes. For example, the lowest portion of the lower skirt profile line 154 may include a substantially linear profile that represents a linear reduction in the piston radius from a location at or about the maximum radius point 155 to a location at or about the piston bottom 122. In other instances, the lowest portion of the lower skirt profile line 154 may include no reduction in the piston radius from a location at or about the maximum radius point 155 to a location at or about the piston bottom 122.

In this embodiment, the intermediate skirt profile line 156 includes a first inflection point 157, at which the lower skirt profile line 154 joins the intermediate skirt profile line 156. At least a portion of the intermediate skirt profile line 156 includes a concave curvature, but it should be understood that other portions of the intermediate skirt profile line 156 may include other curvatures or slopes. This concave curvature may account for substantial changes in rigidity in the intermediate portions of the piston skirt 120 caused, for example, by substantial changes in the thickness of the circumferential wall 126.

In this embodiment, the intermediate skirt profile line 156 also includes a second inflection point 159, at which the upper skirt profile line 158 joins the intermediate skirt profile line 156. At least a portion of the upper skirt profile line 158 may include a convex curvature that meets with the piston head profile line 151. The profile line 158 can be other shapes, however. For example, the upper skirt profile line 158 can have a substantially constant slope from a location at or about the second inflection point 159 to a location at or about the beginning of the piston head 110. In the embodiment of FIG. 1B, none of the radii of the piston head profile line 151 in the thrust plane are larger than the radii of the upper skirt profile line 158 in the thrust plane. In other embodiments, some radii of the piston head profile line 151 in the thrust plane are larger than the radii of the upper skirt profile line 158 in the thrust plane. Also in the embodiment of FIG. 1B, none of the radii of the upper skirt profile line 158 in the thrust plane are larger than the radii of the intermediate skirt profile line 156 in the thrust plane.

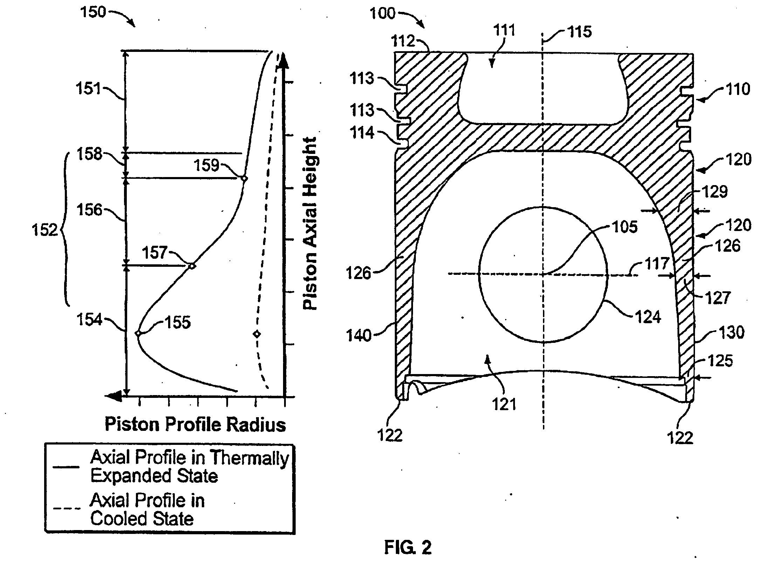

Referring now to FIG 2, the axial profile line 150 of the piston 100 may be represented on a plot showing the radius in the thrust plane relative to the axial height from the piston bottom 122. The plot in FIG. 2 illustrates the axial profile of the piston 100 both at or about operating temperature and at or about room temperature. As previously described, the axial profile of the piston 100 may be different depending on whether the piston 100 is at or about operating temperature or at or about ambient room temperature. For example, the intermediate skirt profile line 156 may be generally convex or linear when the piston is at or about room temperature (refer, for example, to the dotted line on the plot in FIG. 2), but due to thermal expansion of the circumferential wall, the intermediate skirt profile line 156 may adjust to include the concave curvature as it approaches operating temperature (refer, for example, the solid line on the plot in FIG. 2). In other embodiments, the intermediate skirt profile line 156 may include a concave curvature both when the piston 100 is in a thermally expanded state and when the piston 100 is in a cooled state.

FIG. 2 also shows the thrust plane cross-section of the piston 100, which includes the circumferential wall 126 surrounding the hollow portion 121. The circumferential wall 126 varies in thickness in a direction along the piston axis 115, which may affect the rigidity of the piston skirt 120 at certain axial heights. In one example, the lower skirt portion may include a point at which the wall thickness 125 is approximately 4,8mm (0.19 inches), the intermediate skirt portion may include a point at which the wall thickness 127 is approximately 8,6mm (0.34 inches), and the upper skirt portion may include a point at which the wall thickness 129 is approximately 15.5mm (0.61 inches). Because a greater wall thickness can increase the radial rigidity of the circumferential wall 126, the upper skirt point may have substantially greater radial rigidity than the lower skirt point. In addition, the piston skirt 120 can include pin bores 124 aligned with the pin axis 105 to receive the pin 104, which may affect the rigidity of the piston skirt at certain axial heights.

As previously described, the skirt profile line 152 may be shaped to account for the changes in rigidity of the piston skirt from the lower skirt portion to the upper skirt portion. In such embodiments, some flexible portions of the piston skirt 120 may have larger radii in the thrust plane so as to flex when exposed to a thrust load and to cause the piston skirt 120 to bear against the cylinder wall 210 with a more uniform load distribution. For example, the lower portion of the piston skirt 120 may be more flexible and therefore may have a maximum radius point 155 in interference with the cylinder wall 210 at operating temperatures. Because of the flexure in the lower portion of the piston skirt 120, however, the unit area loading about the piston skirt's lower portion is substantially similar to the unit area loading about the skirt's upper portion (i.e. the more rigid, upper portion of the skirt 120 may not bear against the cylinder wall 210 with a substantially greater portion of the thrust load).

Still referring to FIG. 2, the piston 100 may optionally include a combustion bowl 111. The combustion bowl 111 may be used to optimize the combustion characteristics in the combustion chamber of an engine. For example, a combustion bowl 111 may be used in a piston of a gasoline engine, diesel engine or natural gas engine. In such embodiments, the combustion bowl 111 does not significantly affect the rigidity of the piston head 110, and the piston head 110 remains substantially more rigid than portions of the piston skirt 120. In this embodiment, the piston head profile line 151 shows that the radius of the piston head 110 in the thrust plane is smaller than those more flexible portions of the piston skirt 120.

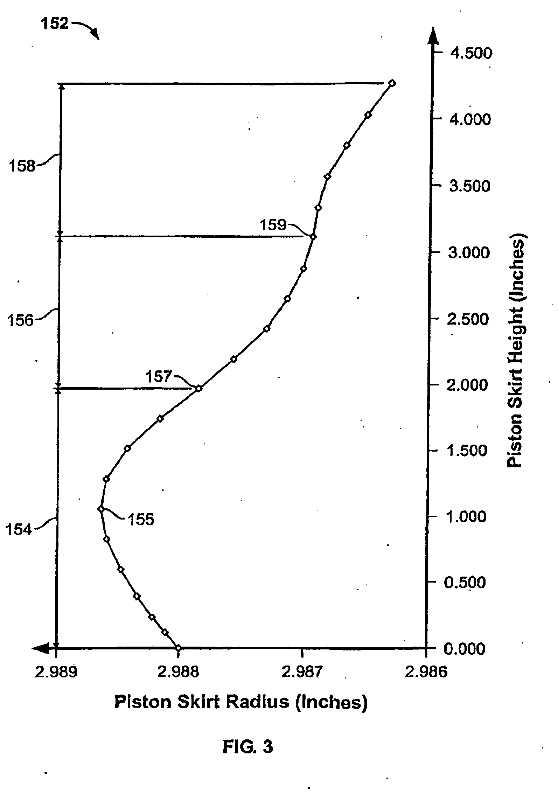

FIG 3 shows one example of the piston skirt profile line 152 represented in a plot where the piston 100 is at or about operating temperature. Because the scale for the piston skirt radius has been limited to a range of 75.84 mm to 75.920 mm (2.986 to 2.989 inches) in this example, the shape of the skirt profile line 152 has been exaggerated. It should be understood that the dimensional scales shown in FIG 3 are for illustrative purposes only, and that other embodiments may include a piston having various dimensions not illustrated in FIG. 3. Furthermore, it should be understood that the axial profile's curvature, proportion, and shape shown in FIG. 3 are for illustrative purposes only, and that other embodiments may include an axial profile having various curvatures, proportions, and shapes not illustrated in FIG. 3. In this example, the piston skirt profile line 152 shows a general decrease in skirt radius from the maximum radius point 155 toward the upper skirt portion. This decrease in skirt radius generally follows the flexibility of the piston skirt in this example, and the change in rate of decreasing radius coincides with a flexible-to-rigid transition of the piston skirt.

Referring to FIG 3, the lowest portion of the lower skirt profile line 154 (e.g., near the bottom at axial height = 0.000) includes a convex curvature inward to avoid gouging the cylinder wall 210 during the reciprocating motion of the piston 100. In this example, the lower skirt profile line 154 includes the maximum radius point 155 at an axial height above the bottom where the piston skirt 120 is least rigid. As previously described, at least a portion of the intermediate skirt profile line 156 may include a concave curvature. Such a concave curvature may, for example, represent a substantial change of the piston skirt's radii in the thrust plane due to a substantial change in the rigidity of the piston skirt. In this example, the intermediate skirt profile line 156 meets with the upper skirt profile line 158 at a second inflection point 159 and extends toward the head profile line (not shown in the example in FIG 3).

As shown in the example in FIG 3, the skirt profile line 152 may be shaped to account for the changes in rigidity of the piston skirt 120 from the lower skirt portion to the upper skirt portion, and such a configuration may permit the piston skirt 120 to bear against the cylinder wall 210 with a more uniform load distribution. In this embodiment, the concave curvature along a portion of the skirt profile line 152 (e.g., along the intermediate skirt profile line 156) can be a part of the piston design that permits the substantially uniform distribution of the thrust load along the piston skirt 120. If, on the other hand, the piston skirt profile line 152 included a single convex curvature (when the piston is at or about operating temperature) that extended the entire axial height of the skirt, the upper portion of the skirt may carry a significantly greater unit area load than the lower skirt portion due to the thrust load. This substantially non-uniform distribution of the thrust load may cause the piston to "polish" or otherwise scuff the cylinder wall (because the upper skirt portion may apply a greater unit area load to the cylinder wall without flexing like the lower skirt portion).

In some embodiments, including the previously described embodiments, the lower portion of the piston skirt 120 may include a maximum radius 155 in the thrust plane that is sized to be in interference with the cylinder wall 210 at operating temperatures. In such embodiments, no seizure of the piston 100 would occur due to flexure in the lower portion of the piston skirt 120. The lower portion of the piston skirt 120 flexes such that the lower portion of the skirt 120 is spring-loaded against the major thrust side 230 and the minor thrust side 240 of the cylinder wall 210. This interaction causes the lower portion of the skirt 120 to contribute in distribution of the thrust load, thereby distributing some of the load that might otherwise be applied at the upper skirt portion or at the head portion 110. By creating a more uniform load distribution along the piston skirt 120, the likelihood of generating local areas of relatively high stress concentrations is reduced, which in turn can reduce the likelihood of "polishing" or otherwise scuffing the cylinder wall 210.

Also in some embodiments, the piston 100 is provided with better guidance because the lower portion of the skirt 120 is spring-loaded against the major and minor thrust sides 230 and 240 of the cylinder wall 210 at operating temperatures. As previously described, when the piston skirt portion 120 bears against the cylinder wall 210 in such a manner and provides sufficient guidance to the piston 100, the tendency of the piston 100 to rock about the pin axis 105 may be reduced, which in turn permits a design having a minimal clearance space between the piston head 110 and the cylinder wall 210. In such circumstances, it is possible that friction may be added to the system when the lower portion of the skirt 120 is spring-loaded to bear against the major and minor thrust sides 230 and 240 of the cylinder wall 210 at operating temperatures. However, this added friction may be negligible because a break in the hydrodynamic layer of lubricant between the cylinder wall 210 and the piston skirt 120 does not necessarily occur. Furthermore, these embodiments may provide a more uniform load distribution between the upper and lower portions of the skirt 120 (previously described), which may reduce the friction caused by "polishing" or otherwise scuffing the cylinder wall 210. Such a reduction in "polishing" friction may offset any friction potentially added by the lower portion of the piston skirt 120 being spring-loaded to bear against the major and minor thrust sides 230 and 240 of the cylinder wall 210 at operating temperatures.

Referring to FIG 4, the polar profile line of the piston 100 at or about operating temperature is schematically depicted with a polar profile line 170. The polar profile line 170 shows the shape of the outer circumferential surface of the piston 100 in a cross-sectional radial plane. In this embodiment, the polar profile line 170 is shown in a radial plane cross-section in the lower portion of the piston skirt 120 (see the cross-section line in FIG 1). The general shape of the polar profile line 170 may be similar even if another radial plane cross-section is taken in another portion of the piston skirt 120. The size of the radii in the polar profile in another radial plane may be in proportion to the outer radius at the major and minor thrust surfaces 130 and 140 as shown in the axial profile line 150 and substantially follow the shape as shown in FIG. 4.

The polar profile line 170 is shown in exaggerated form for illustrative purposes only. It should be understood that changes in outer radius of the piston 100 in the radial plane may be small relative to the overall size of the piston 100, so the piston 100 may appear to have a circular cross-sectional shape when viewed from a distance. Various embodiments of the piston 100 may include piston skirts having cross-sectional shapes that do not perfectly coincide with the cross-sectional shape of the cylinder bore 205. In the embodiment shown in FIG. 4, the cross-sectional circumferential shape of the piston skirt 120 is somewhat like a modified ellipse and is not symmetrical about the pin axis 105. In other embodiments, the cross-sectional circumferential shape may have a different appearance, such as an ellipse or a modified ellipse that is symmetrical about the pin axis 105.

Referring to FIG 4, the piston 100 may have a polar profile design that is asymmetrical about a pin axis 105. In this embodiment, the outer circumferential surface of the piston skirt 120 in the cross-sectional radial plane has a modified elliptical shape that is substantially symmetrical about the thrust axis 117. The maximum radii in the polar profile line 170 occur at the major thrust surface 130 and the minor thrust surface 140. In this radial plane, the major thrust surface 130 and the minor thrust surface 140 are sufficiently sized to bear against the cylinder wall 210 along a major thrust side 230 and a minor thrust side 240, respectively. Such interaction between the piston skirt 120 and the cylinder wall 210 may cause the skirt 120 flex inward in a direction of the thrust axis 117 and correspondingly flex outward in a direction of pin axis 105. For example, when the thrust force 254 (FIG 1) urges the major thrust surface 130 against the major thrust side 230 of the cylinder wall 210, the major thrust surface 130 of the piston skirt may flex inward. This inward flexure causes the piston skirt 120 to flex outward in the direction of the pin axis 105. To allow clearance for this outward flexure in the direction of the pin axis 105, the radii along the non-thrust surfaces 132 and 142 of the piston skirt 120 may be smaller than the radii along the major and minor thrust surfaces 130 and 140 and may be smaller than the radius of the cylinder bore 205 at operating temperatures.

The thrust loads on the major thrust surface 130 may be greater than on the minor thrust surface 140, so the piston skirt 120 may not uniformly flex outward. In such embodiments, the minimum radius 175 may not extend in a direction parallel to the pin axis 105 but instead may extend toward the major thrust side of the pin axis 105 (e.g., the minimum radius point 176 in the polar profile line 170 is away from the pin axis 105 and toward the major thrust surface 130). In this embodiment, polar profile line 170 is substantially symmetrical about the thrust axis 117, so the minimum radius point 176 exists on both sides of the thrust axis 117. Because the thrust loads on the major thrust surface 130 may be greater than on the minor thrust surface 140, the piston skirt 120 may flex outwardly more on the major thrust side than on the minor thrust side. To account for this non uniform flexure of the piston skirt 120, many of the radii on the minor thrust side of the pin axis 105 may be relatively larger than the counterpart radii on the major thrust side of the pin axis 105. The relatively larger radii on the minor thrust side can provide a greater surface area to bear against the cylinder wall 210 and guide the piston 100. The minimum radius 175 on the major thrust side of the pin axis 105 may account for the outward flexure of the piston skirt 120 caused by the greater loading on the major thrust side of the pin axis 105.

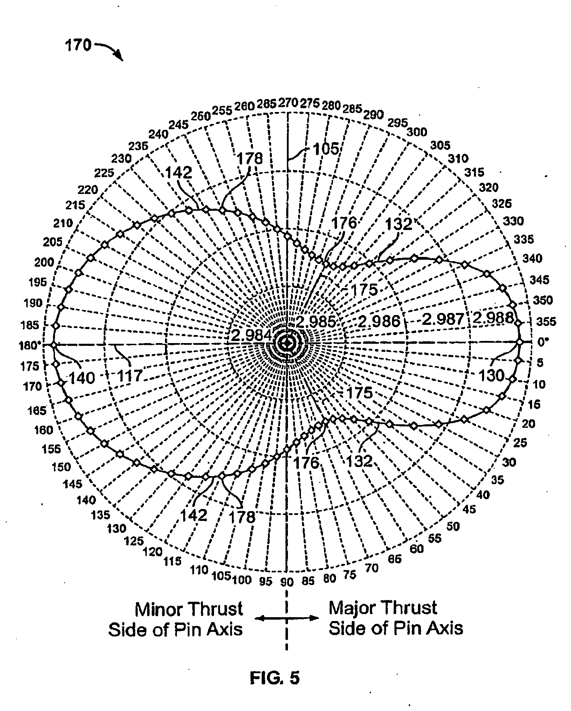

FIG. 5 shows one example of the polar profile line 170 (for a piston 100 at or about operating temperature) represented in a plot. Because the scale for the piston skirt radius has been limited to a range of 75.7936 to 75.8952 mm (2.984 to 2.988 inches) in this example, the shape of the polar profile line 170 has been exaggerated. It should be understood that the dimensional scales shown in FIG. 5 are for illustrative purposes only, and that other embodiments may include a piston having various dimensions not illustrated in FIG. 5. Furthermore, it should be understood that the polar profile's curvature, proportion, and shape shown in FIG. 5 are for illustrative purposes only, and that other embodiments may include a polar profile having various curvatures, proportions, and shapes not illustrated in FIG. 5. In this example, the polar profile line 170 shows that the outer circumferential surface of the piston skirt 120 in the cross-sectional radial plane has a modified elliptical shape which is asymmetrical about the pin axis 105 (and substantially symmetrical about the thrust axis 117).

Referring to FIG. 5, in this example, many of the radii on the minor thrust side of the pin axis 105 may be relatively larger than the counterpart radii on the major thrust side of the pin axis 105. For example, the minimum radius 175 has a length of about 75.8317 mm (2.9855 inches) and occurs at a point 176 on the major thrust side of the pin axis 105 at angle of about 25-degrees from the pin axis 105. The counterpart radius has a length of about 75.8571 mm (2.9865 inches) and occurs at a point 178 on the minor thrust side of the pin axis 105 at an angle of about 25-degrees from the pin axis 105. The maximum radius in this polar profile has a length of about 75.8901 mm (2.9878 inches) and occurs at the major and minor thrust surfaces 130 and 140. The radii along the non-thrust surfaces 132 and 142 are less than this maximum radius to provide clearance for the outward flexure of the piston skirt 120 in the direction of the pin axis 105.

Other embodiments of the piston may include a polar profile that is not illustrated in FIG. 4 or FIG. 5. For example, a piston may include the axial profile shown in FIG. 1, FIG. 2, or FIG. 3 and may also include a polar profile having a modified elliptical shape that is asymmetrical about the pin axis 105. In another example, a piston may include the axial profile shown in FIG. 1, FIG. 2, or FIG. 3 and may also include a polar profile having an elliptical shape that is symmetrical about the pin axis 105. In embodiments having a symmetrical polar profile, the minimum radius may occur along the pin axis 105 and the maximum radius may occur along the thrust axis 117 at the major and minor thrust sides.

## Claims

1. An apparatus, comprising:
an internal combustion engine (200) having at least one wall (210) defining a bore (205); and
a piston (100) disposed to reciprocate in the bore (205), the piston comprising a head portion (110) and a skirt portion (120), the piston having a substantially circumferential outer surface and at least a portion (130) of the outer surface bearing against the wall (210) in a thrust plane,
wherein the outer surface has an axial profile line (150) in the thrust plane that includes a lower skirt profile line (154), an intermediate skirt profile line (156), and an upper skirt profile line (158), wherein the intermediate skirt profile line (156) includes a first inflection point (157), at which the lower skirt profile line (154) joins the intermediate profile line (156), and a second inflection point (159), at which the upper skirt profile line (158) joins the intermediate skirt profile line (156), the intermediate skirt profile line (156) including a concave curvature in the thrust plane when the piston (100) is substantially at an operating temperature, and **characterised by** the intermediate skirt profile line (156) having radii in the thrust plane that are larger than radii of the upper skirt profile line (158) in the thrust plane,
wherein none of the radii of the upper skirt profile line (158) are larger than the radii of the intermediate skirt profile line (156).

2. The apparatus of claim 1, wherein the lower skirt profile line (154) includes a substantially convex curvature in the thrust plane and the upper skirt profile line (158) includes a substantially convex curvature in the thrust plane.

3. The apparatus of claim 1, wherein the outer surface (130) transitions from the substantially convex curvature of the lower skirt profile line (154) to the substantially concave curvature of the intermediate skirt profile line (156) to account for a change in rigidity of the piston (100) .

4. The apparatus of claim 3, wherein the lower skirt profile line (154) and the upper skirt profile line (156) are operable to substantially uniformly distribute a thrust load (254) from the piston (100) to the major thrust side (230) of the wall (210).

5. The apparatus of claim 1, wherein the lower skirt profile line (154) includes a maximum radius that is in an interference fit with the wall (210) when the piston (100) is substantially at the operating temperature.

6. The apparatus of claim 5, wherein a lower skirt portion defined by the lower skirt profile line (154) flexes when in the interference fit to avoid seizure of the piston in the bore.

7. The apparatus of claim 5, wherein a lower skirt portion defined by the lower skirt profile line (154) is spring-loaded against major and minor thrust sides (230 and 240) of the wall (210) when in the interference fit with the wall (210) .

8. The apparatus of claim 7, wherein the outer surface is operable to guide the piston (100) in the bore (205) when the lower skirt portion is spring-loaded against major and minor thrust sides (230 and 240) of the wall (210).

9. The apparatus of claim 7, wherein when the lower skirt portion is spring-loaded against major and minor thrust sides (230 and 240) of the wall (210), the lower skirt portion and an upper skirt portion are operable to substantially uniformly distribute a thrust load (254) from the piston (100) to the major thrust side (230) of the wall (210).

10. The apparatus of claim 5, further comprising a layer of lubricant between a portion of the wall (210) and a portion of the piston (100).

11. The apparatus of claim 1, wherein the piston (100) further comprises a polar profile (170) in a radial plane and a pin axis (105), the polar profile (170) being asymmetrical about the pin axis (105).

## Patentansprüche

1. Vorrichtung mit:
einem Verbrennungsmotor (200) mit mindestens einer Wand (210), durch die eine Bohrung (205) definiert ist; und
einem Kolben (100), der angeordnet ist, um sich in der Bohrung (205) hin- und herzubewegen, wobei der Kolben einen Kopfbereich (110) und einen Schürzenbereich (120) aufweist, wobei der Kolben eine im Wesentlichen umlaufende Außenfläche hat, wobei mindestens ein Bereich (130) der Außenfläche in einer Schubebenen gegen die Wand (210) anliegt,
wobei die Außenfläche in der Schubebene eine axiale Profillinie (150) hat, die eine untere Schürzenprofillinie (154), eine zwischenliegende Schürzenprofillinie (156) und eine obere Schürzenprofillinie (158) enthält, wobei die zwischenliegende Schürzen-profillinie (156) einen ersten Wendepunkt (157) enthält, an dem sich die untere Schürzen-profillinie (154) mit der zwischenliegenden Schürzen-profillinie (156) verbindet, und einen zweiten Wendepunkt (159), an dem sich die obere Schürzenprofillinie (158) mit der zwischenliegenden Schürzen-profillinie (156) verbindet, wobei die zwischenliegende Schürzen-profillinie (156) in der Schubebene eine konkave Krümmung hat, wenn sich der Kolben (100) im Wesentlichen bei einer Betriebstemperatur befindet, und **dadurch gekennzeichnet, dass** die zwischenliegende Schürzen-profillinie (156) in der Schubebene Radien hat, die größer sind als die Radien der oberen Schürzen-profillinie (158) in der Schubebene.
wobei keiner der Radien der oberen Schürzen-profillinie (158) größer ist als die Radien der zwischenliegenden Schürzenprofillinie (156).

2. Vorrichtung nach Anspruch 1, bei der die untere Schürzenprofillinie (154) in der Schubebene eine im Wesentlichen konvexe Krümmung hat und die obere Schürzenprofillinie (158) in der Schubebene eine im Wesentlichen konvexe Krümmung hat.

3. Vorrichtung nach Anspruch 1, bei der die Außenfläche (130) von der im Wesentlichen konvexen Krümmung der unteren Schürzenprofillinie (154) in die im Wesentlichen konkave Krümmung der zwischenliegenden Schürzenprofillinie (156) übergeht, und zwar aufgrund einer Veränderung der Steifigkeit des Kolbens (100).

4. Vorrichtung nach Anspruch 3, bei der die untere Schürzenprofillinie (154) und die obere Schürzenprofillinie (156) verwendet werden können, um eine Schublast (254) von dem Kolben (100) im Wesentlichen auf eine Hauptschubseite (230) der Wand (210) zu verteilen.

5. Vorrichtung nach Anspruch 1, bei der die untere Schürzenprofillinie (154) einen maximalen Radius hat, der mit der Wand (210) in Presspassung steht, wenn sich der Kolben (100) im Wesentlichen bei Betriebstemperatur befindet.

6. Vorrichtung nach Anspruch 5, bei der sich ein unterer Schürzenbereich, der durch die untere Schürzen profillinie (154) definiert ist, bei Presspassung verbiegt, um ein Festfressen des Kolbens in der Bohrung zu vermeiden.

7. Vorrichtung nach Anspruch 5, bei der der untere Schürzenbereich, der durch die untere Schürzen profillinie (154) definiert ist, unter Federlast gegen die Haupt- und Neben-Schubseiten (230 und 240) der Wand (210) anliegt, wenn sie mit der Wand (210) inPresspassung steht.

8. Vorrichtung nach Anspruch 7, bei der die Außenfläche dazu dient, den Kolben (100) in der Bohrung (205) zu führen, wenn der untere Schürzenbereich unter Federlast gegen die Haupt- und Neben-Schubseiten (230 und 240) der Wand (210) anliegt.

9. Vorrichtung nach Anspruch 7, bei der dann, wenn der untere Schürzenbereich unter Federlast gegen die Haupt- und Neben-Schubseiten (230 und 240) der Wand (210 anliegt, der untere Schürzenbereich und ein oberer Schürzenbereich dazu dienen, um eine Schublast (254) von dem Kolben (100) im Wesentlichen gleichmäßig auf die Haupt- Schubseite (230) der Wand (210) zu verteilen.

10. Vorrichtung nach Anspruch 5, außerdem mit einer Schmiermittelschicht zwischen einem Bereich der Wand (210) und einem Bereich des Kolbens (100).

11. Vorrichtung nach Anspruch 1, bei der der Kolben (100) außerdem ein polares Profil (170) in einer radialen Ebene und einer Stiftachse (105) hat, wobei das polare Profil (170) um die Stiftachse (105) asymmetrisch ist.

## Revendications

1. Dispositif comprenant :
un moteur à combustion interne (200) ayant au moins une paroi (210) définissant un alésage (205) ; et
un piston (100) adapté pour aller et venir dans l'alésage (205), le piston comprenant une partie tête (110) et une partie jupe (120), le piston ayant une surface extérieure substantiellement circonférentielle et au moins une partie (130) de la surface extérieure étant en appui contre la paroi (210) dans un plan de poussée,
dans lequel la surface extérieure a une ligne de profil axial (150) dans le plan de poussée qui comprend une ligne de profil de jupe inférieure (154), une ligne de profil de jupe intermédiaire (156), et une ligne de profil de jupe supérieure (158), dans lequel la ligne de profil de jupe intermédiaire (156) comprend un premier point d'inflexion (157), au niveau duquel la ligne de profil de jupe inférieure (154) rejoint la ligne de profil intermédiaire (156), et un second point d'inflexion (159), au niveau duquel la ligne de profil de jupe supérieure (158) rejoint la ligne de profil de jupe intermédiaire (156), la ligne de profil de jupe intermédiaire (156) incluant une courbure concave dans le plan de poussée quand le piston (100) est substantiellement à une température de fonctionnement, et **caractérisé en ce que** la ligne de profil de jupe intermédiaire (156) a des rayons dans le plan de poussée qui sont plus grands que des rayons de la ligne de profil de jupe supérieure (158) dans le plan de poussée,
dans lequel aucun des rayons de ligne de profil de jupe supérieure (158) n'est plus grand que les rayons de la ligne de profil de jupe intermédiaire (156).

2. Dispositif selon la revendication 1, dans lequel la ligne de profil de jupe inférieure (154) comprend une courbure substantiellement convexe dans le plan de poussée et la ligne de profil de jupe supérieure (158) comprend une courbure substantiellement convexe dans le plan de poussée.

3. Dispositif selon la revendication 1, dans lequel la surface extérieure (130) réalise la transition de la courbure substantiellement convexe de la ligne de profil de jupe inférieure (154) à la courbure substantiellement concave de la ligne de profil de jupe intermédiaire (156) pour tenir compte d'un changement de rigidité du piston (100).

4. Dispositif selon la revendication 3, dans lequel la ligne de profil de jupe inférieure (154) et la ligne de profil de jupe supérieure (156) sont aptes à répartir de façon sensiblement uniforme une charge de poussée (254) du piston (100) sur le côté de poussée principal (230) de la paroi (210).

5. Dispositif selon la revendication 1, dans lequel la ligne de profil de jupe inférieure (154) comprend un rayon maximum qui est en ajustement avec serrage avec la paroi (210) quand le piston (100) est substantiellement à la température de fonctionnement.

6. Dispositif selon la revendication 5, dans lequel une partie de jupe inférieure définie par la ligne de profil de jupe inférieure (154) fléchit quand elle est dans l'ajustement avec serrage pour éviter le grippage du piston dans l'alésage.

7. Dispositif selon la revendication 5, dans lequel une partie de jupe inférieure définie par la ligne de profil de jupe inférieure (154) est en ressort contre les côtés de poussée principal et secondaire (230 et 240) de la paroi (210) quand elle est dans l'ajustement avec serrage avec la paroi (210).

8. Dispositif selon la revendication 7, dans lequel la surface extérieure est apte à guider le piston (100) dans l'alésage (205) quand la partie de jupe inférieure est en ressort contre les côtés de poussée principal et secondaire (230 et 240) de la paroi (210).

9. Dispositif selon la revendication 7, dans lequel, quand la partie de jupe inférieure est en ressort contre les côtés de poussée principal et secondaire (230 et 240) de la paroi (210), la partie de jupe inférieure et une partie de jupe supérieure sont adaptées pour répartir de façon sensiblement uniforme une charge de poussée (254) du piston (100) au côté de poussée principal (230) de la paroi (210).

10. Dispositif selon la revendication 5, comprenant en outre une couche de lubrifiant entre une partie de la paroi (210) et une partie du piston (100).

11. Dispositif selon la revendication 1, dans lequel le piston (100) comprend en outre un profil polaire (170) dans un plan radial et un axe de goupille (105), le profil polaire (170) étant asymétrique autour de l'axe de goupille (105).
